# EUROPÄISCHE PATENTSCHRIFT

(11) **EP 2 885 545 B1**
(45) Veröffentlichungstag und Bekanntmachung des Hinweises auf die Patenterteilung: **28.09.2016**
(21) Anmeldenummer: 13759977.5
(22) Anmeldetag: 14.08.2013
(51) Int. Cl.: F16B 7/18

(54) **BEFESTIGUNGSSYSTEM**
FASTENING SYSTEM
SYSTÈME DE FIXATION

(30) Priorität: 15.08.2012 DE 202012007790 U
(43) Veröffentlichungstag der Anmeldung: 24.06.2015
(73) Patentinhaber: Rixen, Wolfgang, 42699 Solingen (DE); Pies, Gerrit, 42699 Solingen (DE)
(72) Erfinder: Rixen, Wolfgang, 42699 Solingen (DE); Pies, Gerrit, 42699 Solingen (DE)
(74) Vertreter: Draudt, Axel Hermann Christian
(86) Internationale Anmeldenummer: PCT/EP2013/002450
(87) Internationale Veröffentlichungsnummer: WO 2014/026767

(56) Entgegenhaltungen:
- DE-A1- 4 244 396
- DE-A1-102007 005 439
- DE-U1- 8 908 669
- DE-U1- 9 313 596
- DE-U1-202010 008 312

## Beschreibung

Die Erfindung betrifft ein Befestigungssystem zur Befestigung zweier jeweils mindestens eine erste bzw. zweite Nut aufweisender erster und zweiter Profilstäbe mit vorgebbarem Winkel zueinander, mit einem Befestigungskörper, der im Montagezustand mittels in den ersten und zweiten Nuten eingebrachten ersten und zweiten Hammerkopfschrauben mit ersten und zweiten Schraubmuttern an den ersten und zweiten Profilstäben angebracht ist.

Grundsätzlich sind derartige Befestigungssysteme oder Verbindungssysteme zur Befestigung zweier jeweils mindestens eine erste bzw. zweite Nut aufweisender Profilstäbe bekannt (siehe z.B. DE 42 44 396 A1).

Bei diesen bekannten Befestigungssystemen besteht allerdings das Problem, dass sich die Hammerkopfschrauben oder -muttern beliebig verdrehen. Dadurch müssen sie zur Montage am Profilstab erst in Nutrichtung gedreht werden, sonst blockieren sie das Einsetzen gegenseitig. Dies ist besonders bei mehreren Hammerkopfschrauben sehr zeitaufwendig.

Der Erfindung liegt daher die Aufgabe zugrunde, ein Befestigungssystem der eingangs genannten Art anzugeben, das mit technisch einfachen Mitteln ein leichtes und einfaches Einsetzen der Hammerköpfe in die Nuten ermöglicht und gleichzeitig die Montagezeit bzw. den Montageaufwand merklich verringert.

Diese Aufgabe wird bei einem Befestigungssystem der eingangs genannten Art erfindungsgemäß dadurch gelöst, dass der Befestigungskörper passfederartig erste und zweite Vorsprünge aufweist, die im Montagezustand in erste und zweite Nutöffnungen hineinragen, wobei die Vorsprünge jeweils mit mindestens einer ersten und einer zweiten Schraubenbohrung versehen sind, die maulartig in jeweils eine der Nutöffnungen hineinragen, wobei die jeweiligen ersten und zweiten Hammerköpfe jeweils einen Drall ausübende Freiform-Köpfe sind, die bei der Montage unter leichtem Druck lediglich jeweils in zwei weit auseinander liegenden ersten und zweiten Nutflankenpunkten anliegen und sich dadurch selbständig in die Nutenlängsrichtung ausrichten und anschließend in die Nuten eintauchen, wobei die Schrägen der Oberflächen der Hammerköpfe an diesen Nutflankenpunkten ein eindrehendes Moment erzeugen, wobei die ersten und zweiten Schäfte im Montagezustand sich teilweise innerhalb der Nutöffnungen befinden und an jeder Hammerkopfschraube am Übergang zwischen Hammerkopf und Schaft erste und zweite Nasen etwa diagonal zueinander angeordnet sind, die im Montagezustand an die maulartigen Schraubenbohrungen drehbegrenzend anliegen.

Der Kern der Erfindung besteht dabei aus folgenden drei Hauptkomponenten:
- Das Verbindungselement weist auf der der Nut zugewandten Seite eine Art Passfeder auf, welche sich maulartig unter die Schraubenbohrung ausdehnt
- Die Hammerkopfschraube besitzt am unteren Ende ihres Schaftes, also direkt oberhalb des Kopfes zwei kleine Nasen, welche in die "Mäuler" des Verbindungselements hineinragen und so eine Drehwinkelbegrenzung bilden. Somit ist ein Verdrehen der Schraube außerhalb ihres Nutzbereichs (0° zum Fügen, 45° in Befestigungsposition) unterbunden
- Als drittes Merkmal hat der Freiform-Kopf der Hammerkopfschraube einen Drall. Dieser bewirkt, dass sich die Hammerkopfschraube - sollte sie in Befestigungsposition auf die Nut treffen - selbständig in Nutrichtung zurückdreht. Dies geschieht dadurch, dass die Hammerkopfschraube die Nutflanken des Profils an nur zwei, weit auseinander liegenden Punkten (91) berührt, und die Schräge der Oberfläche an diesen Punkten ein eindrehendes Moment erzeugt.

Durch diese Kombination ist der Monteur in der Lage, das Befestigungssystem aus der Packung zu nehmen und mit einfachen Handgriffen für die Einsetzung in die entsprechenden Nuten die Hammerkopfschrauben mit dem Befestigungskörper zu verbinden und dann ohne weitere Beachtung der Schrauben diese in die zu verbindenden Profile einzusetzen.

Hierdurch ist diese Verbindungstechnik sehr Zeit effizient und für Ein-Mann-Montage äußerst geeignet.

Bei einer Weiterbildung der Erfindung ist es vorgesehen, dass die maulartigen Schraubenbohrungen mit ihrer längeren Öffnung in Längsrichtung der Vorsprünge sich erstrecken. Dadurch erfahren die eingesetzten Hammerkopfschrauben schon eine gewisse Vorausrichtung in Nutlängsrichtung.

Dabei ist es vorteilhaft, wenn die längere Öffnung die Drehung der Nasen um den Mittelpunkt der Schraubenbohrungen, zu beiden Seiten der Vorsprungslängsachse, auf einen Winkel β von 22° bis 23°, vorzugsweise auf 22,5° begrenzt. Hierdurch ist die oben angesprochene Ausrichtung der Hammerköpfe durch besonders einfache Art und Weise möglich.

Weiterhin ist es vorteilhaft, wenn die maulartigen Schraubenbohrungen von zwei konzentrischen Kreisabschnitten begrenzt werden.

Damit bei einem fertig montierten Befestigungssystem die Schraubmutterköpfe nicht mehr aus der Ebene des Befestigungskörpers herausragen, ist es vorteilhaft, wenn der Befestigungskörper bei den Schraubenbohrungen mit zylinderförmigen ersten und zweiten Senkungen versehen ist.

Eine noch bessere Reibungsfläche der Schraubenmutter an dem Befestigungskörper ist angegeben, wenn den Senkungen dritte und vierte kegelstumpfartige Senkungen sich anschließen und die ersten und zweiten Schraubenmuttern entsprechend geformt sind. Durch diese kegelstumpfförmige Senkung wird die Oberfläche der sich berührenden Körperteile der Schraubenmutter mit dem Befestigungskörper erhöht.

Eine Überprüfung des richtigen Sitzes der fertig montierten Hammerkopfschrauben ist dann gegeben, wenn die freien Stirnseiten der ersten und zweiten Schäfte mit ersten und zweiten Positionsmarkierungen versehen sind.

Dies kann vorteilhafterweise dann noch verbessert werden, wenn die Schraubenbohrungen den ersten und zweiten Positionsmarkierungen entsprechende erste und zweite Markierungen zur Darstellung des gewünschten Sitzes der ersten und zweiten Hammerkopfschrauben aufweisen.

Selbstverständlich kann die Form des Befestigungskörpers in Machbarkeitsgrenzen beliebig sein. Vorteilhaft ist es aber, wenn der Befestigungskörper plattenförmig, winkelförmig oder hohlwinkelförmig ausgebildet ist.

Dabei können die plattenförmigen Befestigungskörper bei Profilen, die mehrere hinterschnittene Nuten aufweist, auch beidseitig an den mit dem Befestigungskörper versehenen Oberflächen der Profilstäbe angeordnet werden.

An den gleichen Oberflächen können aber auch winkelförmige Platten befestigt werden, wobei es dem Monteur frei steht, an beiden Seiten jeweils eine winkelförmige Platte vorzusehen und auch noch zusätzlich eine sogenannte hohlwinkelförmige Befestigungseinheit zwischen diesen Platten an die in diesem Falle senkrecht auseinanderstehenden Profilstäbe anzubringen.

Gemäß einer Weiterbildung der Erfindung ist es vorgesehen, dass der Befestigungskörper auch für Verbindungswinkel zwischen den beiden Profilstäben ausgeformt ist, die in einem Bereich von 0° bis 180° liegen. Dadurch ist es möglich, jeden gewünschten Winkelgrad zwischen den zu befestigenden Profilstäben sicherzustellen. Am häufigsten werden wohl dabei aber die Winkel 90° und 45° auftreten.

Gemäß einer Weiterbildung der Erfindung ist es vorgesehen, dass der Befestigungskörper aus einem Aluminium-Druckguß-Element besteht.

Als besonders vorteilhaft hat sich erwiesen, dass die Einzelteile des Befestigungssystems vormontiert sind. Durch die maßgenaue Vormontage ist zudem maximal eine Umdrehung der Befestigungsmuttern ausreichend, um das Befestigungssystem zu montieren.

Weitere Merkmale und Vorteile von Ausführungsformen der Erfindung ergeben sich aus der folgenden Beschreibung mehrerer Ausführungsbeispiele sowie aus den Zeichnungen, auf die Bezug genommen wird. Es zeigen:
- Fig.1: eine Perspektivansicht eines ersten Ausführungsbeispiels für ein Befestigungssystem zweier T-förmig zueinander angeordneter Profilstäbe;
- Fig.2: eine perspektivische Explosionsdarstellung der Einzelteile des in Fig.1 gezeigten Befestigungssystems;
- Fig.3: eine Draufsicht auf eine Schraubenbohrung zur Aufnahme des Schaftes einer Hammerkopfschraube;
- Fig.4: eine der Fig.3 ähnliche Ansicht der Schraubenbohrung mit eingesetzter Hammerkopfschraube sowie einem Vorsprung, der die Hammerkopfschraube mit Hilfe der beiden diagonal angeordneten Nasen in Befestigungszustand drehsicher hält;
- Fig.5: eine der Fig.4 ähnliche Darstellung, allerdings mit dem Hammerkopf im Einführungszustand für die Nutenöffnung;
- Fig.6: eine Perspektivansicht einer Hammerkopfschraube, wobei die schwächer gezeigten "Konturen" die Freiform des Hammerkopfes und der beiden Nasen darstellen soll;
- Fig.7: eine Unteransicht des Hammerkopfes, wobei auch hier wiederum die schwächeren Linien die Freiform des Kopfes darstellen sollen;
- Fig.8: eine Seitenansicht des Ausführungsbeispiels gemäß Fig.2 unter Weglassung eines Profilstabes;
- Fig.9: die Draufsicht auf das Befestigungssystem mit Profilstab gemäß Fig.8;
- Fig.10: ein weiteres Ausführungsbeispiel eines Befestigungssystems in Form eines sogenannten Hohlwinkels, wobei die entsprechenden Hammerköpfe an den beiden Schenkeln herausragen;
- Fig.11: eine der Fig.10 sehr ähnliche Darstellung, allerdings mit jeweils zwei ersten und zweiten Hammerkopfschrauben an den Schenkeln; und
- Fig.12: eine dreiecksförmige Befestigungsplatte gemäß eines weiteren Ausführungsbeispiels ebenfalls mit jeweils zwei ersten und zweiten Hammerkopfschrauben, die Spitze der Dreieckform weggelassen worden ist.

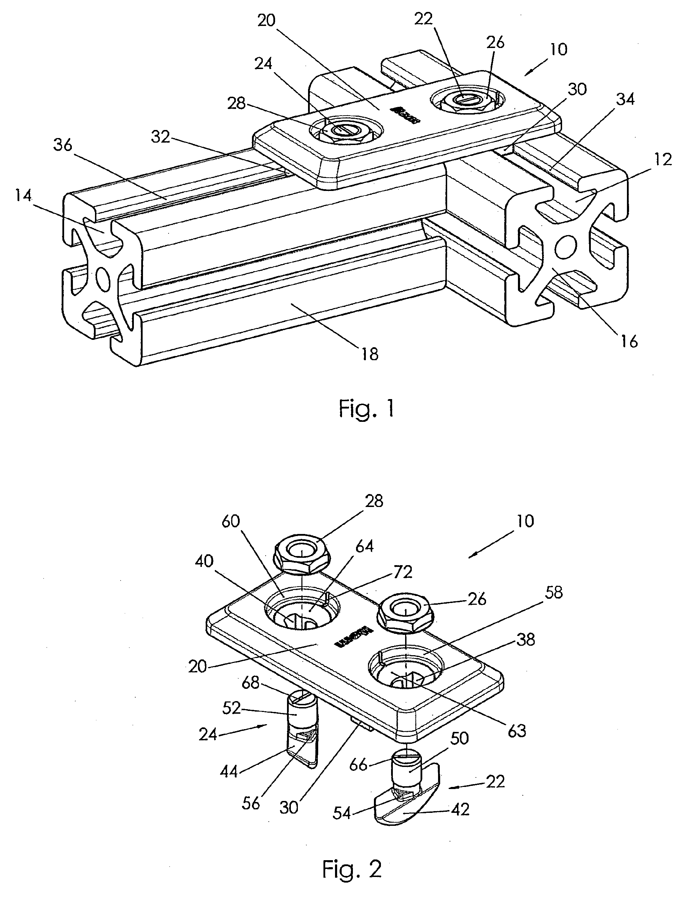

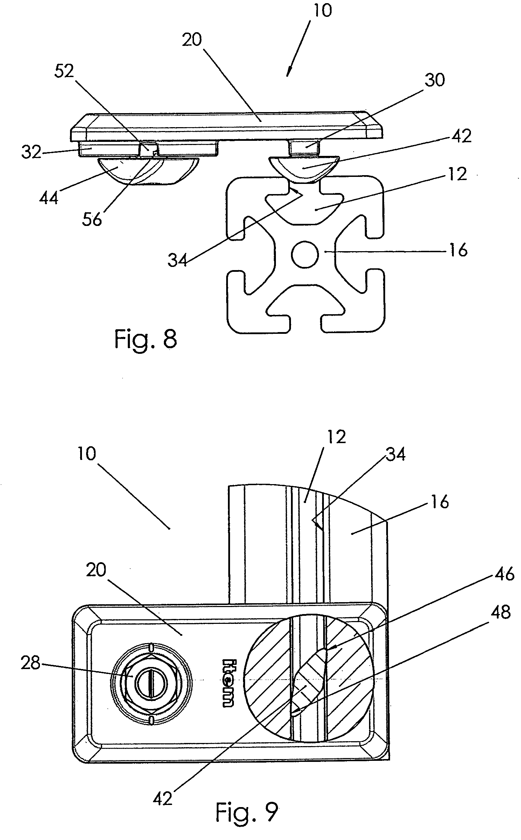

Anhand der Figuren 1 bis 12 werden nunmehr mehrere Ausführungsbeispiele zur Befestigung eines Befestigungssystems 10 zur Befestigung zweier mindestens jeweils eine erste bzw. zweite Nut 12 und 14 aufweisender erster und zweiter Profilstäbe 16,18 beschrieben. Dabei werden, soweit nichts anderes ausgesagt ist, für gleiche bzw. ähnliche Teile gleichen Bezugsziffern verwandt.

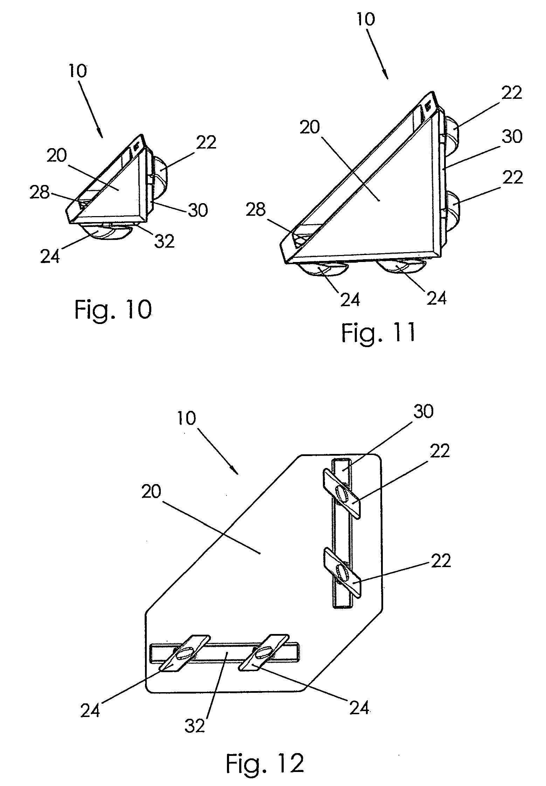

Bei den in den Figuren 1,2,8 und 9 dargestellten Befestigungssystemen 10 handelt es sich bei einem Befestigungskörper 20 jeweils um denjenigen eines ersten Ausführungsbeispiels. Die weiteren möglichen Ausführungsbeispiele eines Befestigungssystems sind in den Figuren 10 bis 12 dargestellt.

Dabei weist jeder Befestigungskörper 20 passfederartige erste und zweite Vorsprünge 30 und 32 auf. Diese ersten und zweiten Vorsprünge 30, 32 ragen dann im Montagezustand in erste und zweite Nutöffnungen 34 und 36 hinein. Hier weist jeder der Vorsprünge 30,32 bzw. jeder Befestigungskörper 20 bei den Vorsprüngen 30 und 32 erste und zweite Schraubenbohrungen 38 und 40 auf, die maulartig in die Nutöffnungen 34 und 36 im Montagezustand hineinragen. Dabei ist es selbstverständlich, dass jede Hammerkopfschraube 22, 24 mit ersten und zweiten Schraubmuttern 26 und 28 an dem Befestigungskörper 20 fixiert sind.

Ein zweiter wichtiger Punkt besteht darin, dass die ersten und zweiten Hammerkopfschrauben 22 und 24 jeweils mit ersten und zweiten Hammerköpfen 42, 44 versehen sind, die einen Drall ausübende Freiform-Köpfe sind. Das bedeutet, das bei der Montage unter leichtem Druck die entsprechend geführten Hammerköpfe 42, 44 an zwei weit auseinander liegenden ersten und zweiten Nutflankenpunkten 46 und 48 anliegen und dadurch quasi selbständig in Nutenlängsrichtung bei der Montage sich ausrichten und anschließend in die Nuten 12 und 14 eintauchen.

Dies ist lediglich dadurch möglich, dass die Hammerköpfe 42, 44 die sogenannte Freiform aufweisen, die gestaltet ist, um einen Drall auf die Hammerköpfe 42, 44 auszuüben. Da es sich bei den Hammerköpfen 42, 44 nicht um feste Formen handelt, wird der Begriff Freiform-Kopf als Beschreibung für die Kontur verwandt.

Damit die sogenannte Freiform ihre Auswirkung entfalten kann, ist es weiterhin noch wichtig, dass jede Hammerkopfschraube 22, 24 an dem Übergang zwischen Hammerkopf 42, 44 und den sich daran anschließenden Schaft 50, 52 erste und zweiten Nasen 54, 56 aufweisen und diese etwa diagonal zueinander auf einer Linie angeordnet sind.

Diese Nasen 54, 56 greifen dann in den jeweils verlängerten Bereich der Schraubenbohrung 38, 40 ein und begrenzen dadurch die Verdrehbarkeit der gesamten Hammerkopfschraube 22, 24 auf diesen kleinen Kreissektor.

Die dabei erlaubte Drehbarkeit sollte bezüglich des Mittelpunktes der Schraubenbohrung 38, 40 in etwa 22° bis 23° zu beiden Seiten der Vorsprungslängsachse betragen, bevorzugt aber 45/2° also 22,5°.

Dadurch und mit der Ausbildung der Freiform des Hammerkopfes 42, 44 ist es dann möglich, dass die ersten und zweiten Nutflankenpunkte 46 und 48 an den am weitesten auseinander liegenden Punkten der Hammerköpfe 42 und 44 berührt werden. In diese Position werden die Hammerköpfe 42 und 44 aufgrund der drallartigen Drehung gebracht, und sie können dann ganz einfach vollständig in Nut 12 oder 14 eintauchen.

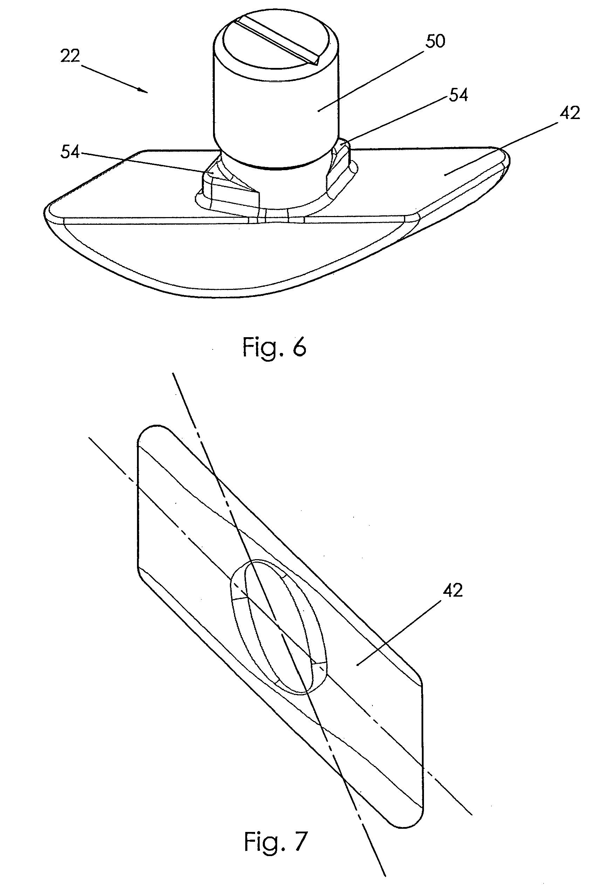

Die Freiformköpfe 42 und 44 sind am besten in den Figuren 6 und 7 erkennbar. Dabei ist darauf hinzuweisen, dass die schwächer gezeigten Linien keine festen Konturen sind sondern lediglich die Freiform andeuten sollen.

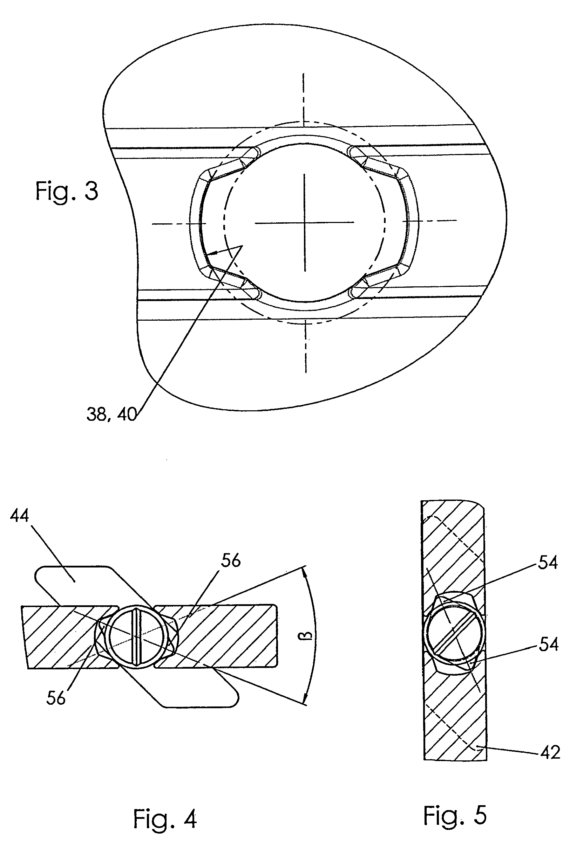

Die ersten und zweiten Schraubenbohrungen 38 und 40 sind derart ausgeformt, dass sie aus zwei konzentrischen Kreisen unterschiedlicher Radien begrenzt sind und so die maulförmige Öffnung bilden. Dies ist besonders anschaulich in Fig.3 dargestellt.

Damit die Schraubmuttern 26 und 28 nicht aus der Oberfläche des Befestigungskörpers 20 nach deren Befestigung herausragen, sind erste und zweite Senkungen 58 und 60 vorgesehen.

Damit aber noch eine größere Reibungskraft zwischen den Schraubenmuttern 38 und 40 und den Befestigungskörpern 20 besteht, sind die ersten und zweiten Senkungen 58 und 60 noch konisch verjüngend weitergeführt mit dritten und vierten kegelstumpfartigen Senkungen 62 und 64.

Selbstverständlich ist dann auch noch jede Schraubenmutter 38, 40 mit einem kegelstumpfartigen Vorsprung versehen.

Des weiteren ist allen Ausführungsbeispielen gemein, dass die freien Stirnseiten der ersten und zweiten Schäfte 50 und 52 mit ersten und zweiten Positionsmarkierungen 66 und 68 versehen sind. Diese Positionsmarkierungen 66 und 68 bestehen bei dem gezeigten Ausführungsbeispielen aus einer einfachen Kerbe in der Stirnfläche der Schäfte 50 und 52. Dabei ist die Ausrichtung dieser Positionsmarkierungen 66 und 68 derart gewählt, dass sie im befestigten Zustand des Befestigungskörpers 20 bzw. des Befestigungssystems 10 in etwa quer zu der Nutlängsrichtung verlaufen.

Damit ein Monteur auch insbesondere bei einem Ausführungsbeispiel gemäß Fig.1 ganz sicher sein kann, dass die Hammerköpfe 42 und 44 in der Befestigungsposition sich befinden, sind an den Schraubenbohrungen 38, 40 den ersten und zweiten Positionsmarkierungen 66 und 68 entsprechende erste und zweite Markierungen 70 und 72 angeordnet. Stimmen dann alle Markierungen überein, so kann der Monteur dann sicher sein, dass die Hammerköpfe 42 und 44 sich in ihrer Befestigungsposition befinden.

Die Befestigungskörper 20 können plattenförmig in einer Rechteckenplatte gemäß Fig.1, winkelförmig wie bei der Ausführungsform gemäß Fig.12, oder aber auch hohlwinkelförmig, wie in den Figuren 10 und 11 gezeigt, ausgebildet sein. Des weiteren ist aus den beiden Zeichnungen 11 und 12 entnehmbar, dass auch pro Befestigungsseite oder pro Befestigungsnase mehr als ein Hammerkopf verwandt werden kann, um eine hohe Stabilität zu erzielen.

Des weiteren ist es auch möglich mehrere Befestigungskörper 20 zu kombinieren. So ist es zum Beispiel möglich, die dreieckförmige Plattenform gemäß Fig.12 zusammen mit einem der beiden hohlwinkelförmigen Befestigungskörpern 20 gemäß Fig.10 oder 11 zu verwenden. Dadurch können dann die Befestigungskräfte stark erhöht werden.

Außerdem ist es möglich, was in den Figuren nicht dargestellt ist, auch unterschiedliche Verbindungswinkel zwischen den beiden Profilstäben 16 und 18 sicherzustellen. Dabei kann ein Bereich zwischen 0° und 180° verwandt werden, wobei allerdings diese Extremwerte 0° und 180° wohl nicht so häufig sind wie evtl. 90° und 45°.

Bevorzugt bestehen die Befestigungskörper 20 aus einem Aluminiumdruckguss-Element.

Obwohl es für einen Monteur schon eine wesentliche Zeitersparnis bedeutet, die erfindungsgemäßen Befestigungssysteme 10 zu verwenden, da ja nicht einzelne Nutensteine oder Hammerkopfschrauben umständlich vorplatziert werden müssen und dann die passenden Schrauben mit den entsprechenden Öffnungen der Befestigungswinkel ebenfalls in Übereinstimmung gebracht werden müssen, ist es aber noch besonders vorteilhaft, wenn die Befestigungssysteme 10 bereits vormontiert hergestellt werden. In diesem Falle braucht der Monteur lediglich das Befestigungssystem 10 aus der Packung zu nehmen und durch leichtes Ansetzen und mit einem kleinen Druck die Nuten mit den entsprechenden Hammerköpfen zu versehen und mit einer Drehung die entsprechenden Schraubenmuttern anzuziehen, um eine feste Verbindung in kürzester Zeit sicherzustellen.

### Bezugszeichenliste:

- 10: Befestigungssystem
- 12: erste Nut
- 14: zweite Nut
- 16: erster Profilstab
- 18: zweiter Profilstab
- 20: Befestigungskörper
- 22: erste Hammerkopfschraube
- 24: zweite Hammerkopfschraube
- 26: erste Schraubenmutter
- 28: zweite Schraubenmutter
- 30: erster Vorsprung
- 32: zweiter Vorsprung
- 34: erste Nutöffnung
- 36: zweite Nutöffnung
- 38: erste Schraubenbohrung
- 40: zweite Schraubenbohrung
- 42: erster Hammerkopf
- 44: zweiter Hammerkopf
- 46: erster Nutflankenpunkt
- 48: zweiter Nutflankenpunkt
- 50: erster Schaft
- 52: zweiter Schaft
- 54: erste Nase
- 56: zweite Nase
- 58: erste Senkung
- 60: zweite Senkung
- 62: dritte Senkung
- 64: vierte Senkung
- 66: erste Positionsmarkierung
- 68: zweite Positionsmarkierung
- 70: erste Markierung
- 72: zweite Markierung

## Patentansprüche

1. Befestigungssystem (10) zur Befestigung zweier jeweils mindestens eine erste bzw. zweite Nut (12,14) aufweisender erster und zweiter Profilstäbe (16,18) mit vorgebbarem Winkel zueinander, mit einem Befestigungskörper (20), der im Montagezustand mittels in den ersten und zweiten Nuten (12,14) eingebrachten ersten und zweiten Hammerkopfschrauben (22,24) mit ersten und zweiten Schraubmuttern (26,28) an den ersten und zweiten Profilstäben (16,18) angebracht ist, wobei der Befestigungskörper (20) passfederartig erste und zweite Vorsprünge (30,32) aufweist, die im Montagezustand in erste und zweite Nutöffnungen (34,36) hineinragen, **dadurch gekennzeichnet, dass** die Vorsprünge (30,32) jeweils mit mindestens einer ersten und einer zweiten Schraubenbohrung (38,40) versehen sind, die maulartig in jeweils eine der Nutöffnungen (34,36) hineinragen, wobei die jeweiligen ersten und zweiten Hammerköpfe (42,44) jeweils einen Drall ausübende Freiform-Köpfe sind, die sich bei der Montage unter leichtem Druck lediglich jeweils in zwei weit auseinander liegenden ersten und zweiten Nutflankenpunkten (46,48) anlegen und sich dadurch selbständig in die Nutenlängsrichtung ausrichten und anschließend in die Nuten (12,14) eintauchen, wobei die Schrägen der Oberflächen der Hammerköpfe (42,44) an diesen Nutflankenpunkten (46,48) ein eindrehendes Moment erzeugen, wobei die ersten und zweiten Schäfte (50,52) im Montagezustand sich teilweise innerhalb der Nutöffnungen (34,36) befinden und an jeder Hammerkopfschraube (22,24) am Übergang zwischen Hammerkopf (42,44) und Schaft (50,52) erste und zweite Nasen (54,56) etwa diagonal zueinander angeordnet sind, die im Montagezustand an die maulartigen Schraubenbohrungen (38,40) drehbegrenzend anliegen.

2. Befestigungssystem (10) nach Anspruch 1, **dadurch gekennzeichnet, dass** die maulartigen Schraubenbohrungen (38,40) mit ihrer längeren Öffnung in Längsrichtung der Vorsprünge (30,32) sich erstrecken.

3. Befestigungssystem (10) nach Anspruch 2, **dadurch gekennzeichnet, dass** die längere Öffnung die Drehung der Nasen (54,56) um den Mittelpunkt der Schraubenbohrungen (38,40), zu beiden Seiten der Vorsprungslängsachse, auf einen Bereich von 22° bis 23°, vorzugsweise auf 22,5° begrenzt.

4. Befestigungssystem (10) nach einem der Ansprüche 1 bis 3, **dadurch gekennzeichnet, dass** die maulartigen Schraubenbohrungen (38,40) von zwei konzentrischen Kreisabschnitten begrenzt werden.

5. Befestigungssystem (10) nach einem der Ansprüche 1 bis 4, **dadurch gekennzeichnet, dass** der Befestigungskörper (20) bei den Schraubenbohrungen (38,40) mit zylinderförmigen ersten und zweiten Senkungen (58,60) versehen ist.

6. Befestigungssystem (10) nach Anspruch 5, **dadurch gekennzeichnet, dass** die Senkungen (58,60) dritte und vierte kegelstumpfartige Senkungen (62,64) sich anschließen, und dass die ersten und zweiten Schraubenmuttern (38,40) entsprechend geformt sind.

7. Befestigungssystem (10) nach einem der Ansprüche 1 bis 6, **dadurch gekennzeichnet, dass** die freien Stirnseiten der ersten und zweiten Schäfte (50,52) mit ersten und zweiten Positionsmarkierungen (66,68) versehen sind.

8. Befestigungssystem (10) nach Anspruch 7, **dadurch gekennzeichnet, dass** die Schraubenbohrungen (38,40) den ersten und zweiten Positionsmarkierungen (66,68) entsprechende erste und zweite Markierungen (70,72) zur Darstellung des gewünschten Sitzes der ersten und zweiten Hammerkopfschrauben (22,24) aufweisen.

9. Befestigungssystem (10) nach einem der Ansprüche 1 bis 8, **dadurch gekennzeichnet, dass** der Befestigungskörper (20) aus einem Aluminium-Druckguß-Element besteht.

10. Befestigungssystem (10) nach einem der Ansprüche 1 bis 9, **dadurch gekennzeichnet, dass** der Befestigungskörper (20) plattenförmig, winkelförmig oder hohlwinkelförmig ausgebildet ist.

11. Befestigungssystem (10) nach Anspruch 10, **dadurch gekennzeichnet, dass** der Befestigungskörper (20) auch für Verbindungswinkel zwischen den beiden Profilstäben (16,18) ausgeformt sind, die in einem Winkel β von 0° bis 180° liegen.

12. Befestigungssystem (10) nach einem der Ansprüche 1 bis 11, **dadurch gekennzeichnet, dass** die Einzelteile des Befestigungssystems (10) vormontiert sind.

## Claims

1. Fastening system (10) for fastening two first and second profile bars (16, 18), which comprise in each case at least one first and second groove (12, 14), at a predeterminable angle with respect to one another, comprising a fastening body (20) which, in the mounted state, is attached to the first and second profile bars (16, 18) by means of first and second hammer head screws (22, 24) which are introduced in the first and second grooves (12, 14) and have first and second screw nuts (26, 28), wherein the fastening body (20) comprises, in the manner of a feather key, first and second projections (30, 32) which, in the mounted state, project into first and second groove openings (34, 36), **characterised in that** the projections (30, 32) are each provided with at least one first and one second screw bore (38, 40) which project jaw-like in each case into one of the groove openings (34, 36), wherein the respective first and second hammer heads (42, 44) are in each case free-form heads which exert a twist action and which, during mounting under slight pressure, contact one another in each case only at two first and second groove flank points (46, 48) located far apart from one another, and are thereby automatically oriented in the groove longitudinal direction and subsequently enter into the groves (12, 14), wherein the slants of the surfaces of the hammer heads (42, 44) generate at these groove flank points (46, 48) an inwardly rotating moment, wherein, in the mounted state, the first and second shafts (50, 52) are located partially within the groove openings (34, 36) and on each hammer head screw (22, 24) at the transition between the hammer head (42, 44) and shaft (50, 52) first and second noses (54, 56) are arranged approximately diagonally with respect to one another and in the mounted state lie against the jaw-like screw bores (38, 40) in such a manner as to limit rotation.

2. Fastening system (10) as claimed in claim 1, **characterised in that** the jaw-like screw bores (38, 40) extend with their longer opening in the longitudinal direction of the projections (30, 32).

3. Fastening system (10) as claimed in claim 2, **characterised in that** the longer opening limits the rotation of the noses (54, 56) about the centre point of the screw bores (38,40), on both sides of the longitudinal axis of the projection, to a range of 22° to 23°, preferably to 22.5°.

4. Fastening system (10) as claimed in any one of claims 1 to 3, **characterised in that** the jaw-like screw bores (38, 40) are defined by two concentric circular portions.

5. Fastening system (10) as claimed in any one of claims 1 to 4, **characterised in that** the fastening body (20) is provided in the screw bores (38, 40) with cylindrical first and second depressions (58, 60).

6. Fastening system (10) as claimed in claim 5, **characterised in that** the depressions (58, 60) are adjoined by third and fourth truncated cone-shaped depressions (62, 64), and **in that** the first and second screw nuts (38, 40) are shaped accordingly,

7. Fastening system (10) as claimed in any one of claims 1 to 6, **characterised in that** the free end faces of the first and second shafts (50, 52) are provided with first and second position markings (66, 68).

8. Fastening system (10) as claimed in claim 7, **characterised in that** the screw bores (38, 40) comprise first and second markings (70, 72), which correspond to the first and second position markings (66, 68), to indicate the desired seat of the first and second hammer head screws (22, 24).

9. Fastening system (10) as claimed in any one of claims 1 to 8, **characterised in that** the fastening body (20) consists of an aluminium pressure die cast element.

10. Fastening system (10) as claimed in any one of claims 1 to 9, **characterised in that** the fastening body (20) is planar, angular or in the form of a hollow angle.

11. Fastening system (10) as claimed in claim 10, **characterised in that** the fastening body (20) is also formed for connecting angles between the two profile bars (16, 18) which are at an angle β of 0° to 180°.

12. Fastening system (10) as claimed in any one of claims 1 to 11, **characterised in that** the individual parts of the fastening system (10) are preassembled.

## Revendications

1. Système de fixation (10) pour la fixation de deux premier et second profilés (16, 18) présentant respectivement au moins une première et une seconde rainure (12, 14), avec entre eux un angle apte à être prédéfini, avec un corps de fixation (20) qui, en position de montage, est installé sur les premier et second profilés (16, 18) à l'aide de première et seconde vis à tête rectangulaire (22, 24) introduites dans les première et seconde rainures (12, 14), avec des premier et second écrous (26, 28), le corps de fixation (20) présentant, à la manière d'une clavette, des première et seconde saillies (30, 32) qui, en position de montage, pénètrent dans des première et seconde ouvertes de rainure (34, 36),
**caractérisé en ce que** les saillies (30, 32) sont pourvues respectivement d'au moins un premier et un second perçage fileté (38, 40) qui pénètrent à la manière d'un bec dans les ouvertures de rainure (34, 36) respectives, les première et seconde têtes rectangulaire (42, 44) respectives étant des têtes de formage libre qui exercent une torsion et qui, lors du montage, s'appliquent avec une légère pression simplement dans deux premier et second points de flanc de rainure (46, 48) espacés l'un de l'autre et s'orientent ainsi toutes seules dans le sens longitudinal des rainures et entrent ensuite dans lesdites rainures (12, 14), les biseaux des surfaces des têtes rectangulaires (42, 44) produisant au niveau de ces points de flanc de rainure (46, 48) un moment de vissage, les première et seconde tiges (50, 52), en position de montage, se trouvant en partie à l'intérieur des ouvertures de rainure (34, 36), et des premiers et seconds ergots (54, 56) étant disposés à peu près en diagonale sur chaque vis à tête rectangulaire (22, 24), à la jonction entre la tête rectangulaire (42, 44) et la tige (50, 52), lesquels ergots, en position de montage, sont appliqués contre les perçages filetés en forme de becs (38, 40) en limitant la rotation.

2. Système de fixation (10) selon la revendication 1, **caractérisé en ce que** les perçages filetés en forme de becs (38, 40) s'étendent avec leur ouverture plus longue dans le sens longitudinal des saillies (30, 32).

3. Système de fixation (10) selon la revendication 2, **caractérisé en ce que** l'ouverture plus longue limite la rotation des ergots (54, 56) autour du centre des perçages filetés (38, 40), des deux côtés de l'axe longitudinal des saillies, à une plage de 22° à 23°, de préférence à 22,5°.

4. Système de fixation (10) selon l'une des revendications 1 à 3, **caractérisé en ce que** les perçages filetés en forme de becs (38, 40) sont limités par deux segments de cercle concentriques.

5. Système de fixation (10) selon l'une des revendication 1 à 4, **caractérisé en ce que** le corps de fixation (20) est pourvu, au niveau des perçages filetés (38, 40), de première et seconde fraisures cylindriques (58, 60).

6. Système de fixation (10) selon la revendication 5, **caractérisé en ce que** des troisième et quatrième fraisures tronconiques (62, 64) font suite aux fraisures (58, 60), et **en ce que** les premier et second écrous (26, 28) ont une forme correspondante.

7. Système de fixation (10) selon l'une des revendications 1 à 6, **caractérisé en ce que** les côtés frontaux libres des première et seconde tiges (50, 52) sont pourvus de premier et second repères de position (66, 68).

8. Système de fixation (10) selon la revendication 7, **caractérisé en ce que** les perçages filetés (38, 30) présentant des premier et second repères (70, 72) correspondant aux premier et second repères de position (66, 68), pour indiquer le calage souhaité des première et seconde vis à tête rectangulaire (22, 24).

9. Système de fixation (10) selon l'une des revendications 1 à 8, **caractérisé en ce que** le corps de fixation (20) se compose d'un élément en aluminium coulé sous pression.

10. Système de fixation (10) selon l'une des revendications 1 à 9, **caractérisé en ce que** le corps de fixation (20) a la forme d'une plaque, d'une cornière ou d'une cornière creuse.

11. Système de fixation (10) selon la revendication 10, **caractérisé en ce que** le corps de fixation (20) est également formé pour des cornières de liaison entre les deux profilés (16, 18) qui sont placés suivant un angle β de 0° à 180°,

12. Système de fixation (10) selon l'une des revendications 1 à 11, **caractérisé en ce que** les pièces détachées du système de fixation (10) sont pré-montées.
